**Europäisches Patentamt**

**European Patent Office**

**Office européen des brevets**

(19)

(11) Veröffentlichungsnummer : **0 173 114 B2**

(12) # NEUE EUROPÄISCHE PATENTSCHRIFT

(45) Veröffentlichungstag der neuen Patentschrift :
**14.07.93 Patentblatt 93/28**

(51) Int. Cl.⁵ : **A46B 9/04,** A46B 7/06

(21) Anmeldenummer : **85109758.4**

(22) Anmeldetag : **02.08.85**

(54) **Verfahren zum Reinigen der Zähne und Zahnreinigungsgerät.**

(30) Priorität : **31.08.84 DE 3431991**

(43) Veröffentlichungstag der Anmeldung :
**05.03.86 Patentblatt 86/10**

(45) Bekanntmachung des Hinweises auf die
Patenterteilung :
**09.01.91 Patentblatt 91/02**

(45) Bekanntmachung des Hinweises auf die
Entscheidung über den Einspruch :
**14.07.93 Patentblatt 93/28**

(84) Benannte Vertragsstaaten :
**AT BE CH DE FR IT LI LU NL SE**

(56) Entgegenhaltungen :
**EP-A- 0 015 060
CH-A- 611 785
DE-A- 2 634 859
DE-B- 1 194 816
DE-B- 1 233 821
DE-C- 195 608
DE-C- 817 133**

(56) Entgegenhaltungen :
**GB-A- 2 097 663
US-A- 1 414 645
US-A- 1 830 995
US-A- 1 840 246
US-A- 1 860 924
US-A- 2 628 377
US-A- 2 935 755
US-A- 3 082 457
US-A- 3 984 890
US-A- 4 224 710
US-A- 4 253 212**

(73) Patentinhaber : **Maurer, Wilhelm
Talacherring 15
CH-8103 Unterengstringen (CH)**

(72) Erfinder : **Maurer, Wilhelm
Talacherring 15
CH-8103 Unterengstringen (CH)**

(74) Vertreter : **Troesch, Hans Alfred, Dr. sc. techn.
et al
Troesch Scheidegger Werner AG
Siewerdtstrasse 95
CH-8050 Zürich (CH)**

**Beschreibung**

Die vorliegende Erfindung betrifft Verfahren zum Antrieb eines motorisch getriebenen Zahnreinigungsorgans, nach dem Oberbegriff der Ansprüche 1 bzw. 2.

Zahnpflege kann auf verschiedene Arten, die sich teilweise ergänzen, erfolgen. Bis heute hat sich das Bürsten der Zähne am besten bewährt. Dabei kommt der Entfernung der sog. Plaque zur Verhinderung der Ka eine grosse Bedeutung zu, ebenso wie einer sinnvollen Massage des Zahnfleisches. Untersuchungen zeigen, dass beim Einsatz herkömmlicher Reinigungsgeräte, wie von Zahnbürsten, die Zähne auf der Gebissinnenseite, d.h. auf der der Mundhöhle zugekehrten Seite, signifikant schlechter gereinigt werden als auf der Aussenseite, dies gilt in noch verstärktem Masse für die den Interdentalraum festlegenden Zahnseiten. Ein Grund dafür ist sicherlich darin zu sehen, dass es wesentlich mehr Mühe bereitet, ein Zahnreinigungsgerät, wie eine Zahnbürste, auf der Innenseite des Gebisses richtig zu führen. Eine optimale Zahnreinigung muss aber gleichermassen auf der Zahninnenseite wie auf der Zahnaussenseite sowie im Interdentalraum erfolgen. Es ist weiter wissenschaftlich erwiesen, dass Reinigungsorgane, wie Borsten, eine Schiebebewegung, ausgehend vom Zahnfleisch über den Zahnhals zur Zahnkrone, ausführen sollten. Im weiteren ist bei herkömmlichen Zahnreinigungsgeräten der reinigende Kontaktdruck zwischen den Reinigungsorganen und dem Zahn völlig willkürlich. Wird ein zu geringer Druck ausgeübt, so ist die Reinigung schlecht. Ist der Druck jedoch zu gross, so ist mit einer Beeinträchtigung von Zahnfleisch/Zahn und Zahnschmelz zu rechnen, insbesondere des Zahnfleischansatzes am Zahnhals.

Aus der US-PS 3 592 188 ist ein Verfahren zum Antrieb eines motorisch getriebenen Zahnreinigungsorgans bekannt geworden, bei dem das Reinigungsorgan in Form einer Zahnbürste mit Hilfe einer Bewegungsführungskurve in nierenförmigen Bewegungen geführt wird. Dabei ist der Bewegungshub des Reinigungsorgans bei entsprechendem Anlegen an zu reinigende Zähne in Richtung der Zahnlängsachse wesentlich grösser als der Bewegungshub besagten Organs quer dazu. Dadurch wird den zwischen Backen und Zahnfleisch bzw. Zahn zur Verfügung stehenden Platzverhältnissen im Mund Rechnung getragen. Allerdings ergibt die Zwangssteuerung der Reinigungsorgane entsprechend der vorgesehenen Bewegungsführungskurve sowohl in Zahnlängsachsrichtung, wie auch in Richtung quer dazu, eine eigentliche Bewegungssteuerung, indem weitgehend unabhängig von den Reaktionskräften auf das Reinigungsorgan eine vorgegebene Bewegungsbahn durchlaufen wird.

Im weiteren ist aus der US-PS 4 224 710 ein Verfahren zum Antrieb eines motorisch getriebenen Reinigungsorgans bekannt geworden, bei dem das Reinigungsorgan in einer ersten Richtung entsprechend einer Zahnlängsachse und in einer zweiten Richtung senkrecht dazu unterschiedlich oszillierend bewegt wird. Im Unterschied zu dem aus der US-PS 3 592 188 bekannten Antriebsverfahren werden hier die Reinigungsorgane, wiederum Zahnbürsten, oszillierend schiefwinklig zur Zahnlängsachse bewegt, d.h. mit einer oszillierenden Komponente senkrecht zum Zahn und einer ebensolchen Längskomponente. Bedingt durch die Tatsache, dass eine einzige schiefwinklige Bewegung in die erwähnten zwei Richtungskomponenten zerlegt wird, ergibt sich eine zwingende Abhängigkeit der beiden Bewegungskomponenten, sowohl was ihre Amplituden anbelangt, in Zahnlängsrichtung und quer dazu, wie auch was die entsprechende Kraftwirkung anbelangt.

Aus der CH-A-611 785 und der DE-A-1 194 816 ist je ein Verfahren eingangs genannter Art bekannt.

Gemäss der CH-A-611 785 wird an einer Stielzahnbürste mittels eines Exzenterantriebes und über eine Blattfeder, durch deren Federung, in zweiter Richtung ein Kraftantrieb realisiert, während die Federstarrheit in erster Richtung für einen Bewegungsantrieb sorgt.

Die DE-A-1 194 816 ihrerseits schlägt vor, zwei Stielzahnbürsten durch jeweils zugeordnete Exzenterantriebe auf Kegelflächen zu bewegen, wobei die Bürstenstiele, durch die für Abschnitte vorgeschlagene Elastizität mit Vorzugsbiegungsrichtung senkrecht zu den Arbeitsflächen der Bürsten, die genannten beiden Antriebsarten in je zwei zueinander senkrechten Richtungen ergeben.

Während diese Antriebe, bei der einen Stielzahnbürste, in den beiden eingangs definierten ersten und zweiten Richtungen wirken, wie auch diejenige gemäss der CH-A-611 785, ist die Wirkungsrichtung des Bewegungsantriebes der zweiten Stielzahnbürste zur Wirkungsrichtung dieses Antriebes an der ersten Stielzahnbürste so geneigt, dass gleichzeitig Zahnoberseite und eine der Zahnflanken gereinigt werden können.

Nachteilig an diesen vorbekannten Vorgehen ist, dass der Reinigungsdruck, der durch die jeweiligen Bürsten auf den Zahn ausgeübt werden, je nach Form des Zahnes ungleichmässig ist und weitestgehend von der manuellen Führung des jeweiligen Gerätes abhängt.

Die vorliegende Erfindung setzt sich zum Ziel, bei einem Verfahren eingangs genannter Art die Verhältnisse betreffs Reinigungsdruck zu verbessern.

Zu diesem Zweck wird das eingangs genannte Verfahren nach dem kennzeichnenden Teil von Anspruch 1 oder von Anspruch 2 ausgeführt.

Zur Lösung derselben Aufgabe schlägt die vorliegende Erfindung im weiteren vor, ein Zahnreinigungsgerät nach dem Wortlaut der Ansprüche 7 oder 8 vor.

Im weitern ergibt ein Vorgehen gemäss Anspruch 3 eine optimale Massage- und Reinigungsbewegung, gemäss Wortlaut von Anspruch 4 bei beidseitigem Reinigen der Zähne.

Durch Ausbildung nach dem Wortlaut von Anspruch 2 wird erreicht, dass sich die Reinigungsorgane an indivuelle Zahnformen anpassen können, ein optimales Anschmiegen an die jeweiligen Zahnoberflächen sichergestellt ist und insbesondere eine gute Reinigung im Interdentalraum, d.h. zwischen den Zähnen, generell in kaum oder schlecht zugänglichen Partien, wie Ritzen etc. ermöglicht wird.

Die Erfindung wird anschliessend beispielsweise anhand von Figuren erläutert.

Es zeigen:

Fig. 1 anhand eines schematisch dargestellten Zahnes mit Zahnfleisch, die Bewegungskoordinate für die Reinigungsorganbewegung an einem erfindungsgemässen Zahnreinigungsgerät sowie die prinzipielle Abhängigkeit vom Reinigungsdruck und Bewegung in der Bewegungskoordinate,

Fig. 2 schematisch die prinzipielle Ausbildung eines bevorzugten, erfindungsgemässen Zahnreinigungsgerätes für mindestens zweiseitige Zahnreinigung, unter mindestens nahezu gleichen Reinigungsdrücken und zur Ausführung einer reinigungsoptimalen Wischbewegung der Reinigungsorgane,

Fig. 3 über die Zeitachse den qualitativen Verlauf von Reinigungsorganbewegung und Drukkapplikation an einem Gerät gemäss Fig. 2,

Fig. 4 in der Figurenebene von Fig. 2 die prinzipielle Bewegung der linken und rechten Reinigungsorgane,

Fig. 5 prinzipiell und schematisch eine bevorzugte Realisiationsform eines Zahnreinigungsgerätes gemäss Fig. 2,

Fig. 6 eine vergrösserte, schematische Teilansicht eines erfindungsgemässen Gerätes, prinzipiell gemäss Fig. 5, mit Kipphebelbetätigung der Reinigungsorgane,

Fig. 7 die Anordnung gemäss Fig. 6, bei ausgeklappten Kipphebeln,

Fig. 8 eine schematischen Ansicht, teilweise geschnitten, gemäss Linie |-| von Fig. 6,

Fig. 9 eine Darstellung analog zu Fig. 7, mit einem prinzipiellen Antrieb von Zahnoberseiten-Reinigungsorganen,

Fig. 10 eine Teilansicht analog zur Ansicht von Fig. 6, mit einer weiteren Variante der Kipphebelanordnung,

Fig. 11 die Anordnung gemäss Fig. 10 bei ausgeklappten Kipphebeln,

Fig. 12 eine Ansicht analog zu derjenigen von Fig. 8, der Anordnung gemäss der Fig. 10 bzw. 11,

Fig. 13 eine schematische Längsschnittdarstellung gemäss der Achse A von Fig. 5 durch ein erfindungsgemäses Gerät, mit einer weiteren Ausführungsvariante von Antriebsorganen für Zahnoberseiten-Reinigungsorgane,

Fig. 14 eine Ansicht analog zu Fig. 5 einer weiteren Ausführungsvariante des erfindungsgemässen Reinigungsgerätes,

Fig. 15 einen Längsschnitt der einen Seite eines Zahnreinigungsgerätes in bevorzugter Ausführungsform analog zur schematischen Darstellung gemäss den Fig. 10 und 11, bei ausgeklappten Kipphebeln,

Fig. 16 eine Darstellung analog zu Fig. 15, unter Auslassung der Kipphebel mit den Reinigungsorganen, mit einem bevorzugten Antrieb von Zahnoberseiten-Reinigungsorganen.

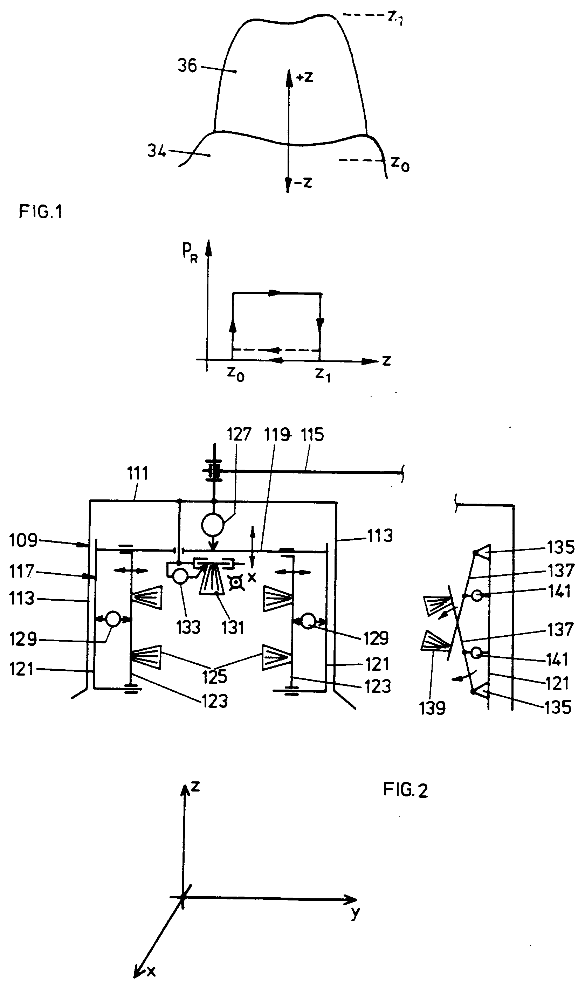

In Fig. 1 ist dargestellt, wie in einer unteren Position, entsprechend $z_0$ am Zahnfleisch 34 der Auflagedruck $P_R$ aufgebaut und unter diesem vorgeschriebenen Reinigungsdruck die Zahnreinigungsorgane in Richtung +z gegen den Zahn 36 vorgetrieben werden. Bei Erreichen der oberen Position, beispielsweise entsprechend $z_1$, wird der Reinigungsdruck reduziert und die Reinigungsorgane in -z-Richtung in die Position entsprechend $z_0$ rückgeführt.

In Fig. 2 ist ein U-förmiger Trägerrahmen 109 vorgesehen, mit einer Basis 111 und Schenkeln 113. Der Trägerrahmen 109 ist an einem Führungsgriff 115 drehbeweglich gelagert. Im Trägerrahmen 109 ist ein Reinigungsrahmen 117 kolbenartig linear beweglich gelagert, bestehend aus einer in z-Richtung zwischen den Schenkeln 113 linear beweglichen Basis 119 und zwei den Schenkeln 113 entlang gleitenden Reinigungsrahmenschenkeln 121. Linear beweglich in y-Richtung ist beidseitig je ein Reinigungsorganträger 123 vorgesehen. Mithin ist die Basis 119 lediglich in z-Richtung mit Bezug auf den Trägerrahmen 109 beweglich, hingegen sind die Reinigungsorganträger 123 sowohl in z-wie auch in y-Richtung beweglich, mit Bezug auf den -Rahmen 109. Die Reinigungsorganträger 123 tragen beide, nach innen ragend, Reinigungsorgane, wie Borstenbündel 125. Zwischen der Basis 111 als Bezugsbasis und der Basis 119 wirkt ein Antriebsorgan 127. Zwischen den Schenkeln 121 und den Reinigungsorganträgern 123 wirken Druckerzeugungsorgane 129. Wie im weiteren auch schematisch dargestellt, sind Oberseiten-Reinigungsorgane, wie Oberseiten-Borstenbündel 131, vorgesehen, die unabhängig von der Bewegung des Reinigungsrahmens 117, wie eingezeichnet, in z.B. x-Richtung linear beweglich sind und hierfür mit entsprechenden Antriebsorganen 133 versehen sind.

Wie rechterhand von Fig. 2 ausschnittsweise dargestellt, ist es durchaus mögich, anstelle der linear verschieblichen Reinigungsorganträger 123, kipphebelartig an Lagern 135 abgestützte Kipphebel 137 als Reinigungsorganträger einzusetzen, mit Reinigungsorganen, wie Borstenbündeln 139, versehen. Wiederum greifen zwischen den Schenkeln 121 des Reinigungsrahmens 117 und den Kipphebeln 137 Druckerzeugungsorgane 141 an. Anstelle einer linearen Bewegung in y-Richtung, gemäss der Ausführungsvariante links von Fig. 2, ergibt die Ausführungsvariante rechts davon eine zangenartige Kippbewegung der Borstenbündel 139 mit einer Komponente in z- und einer Komponente in y-Richtung.

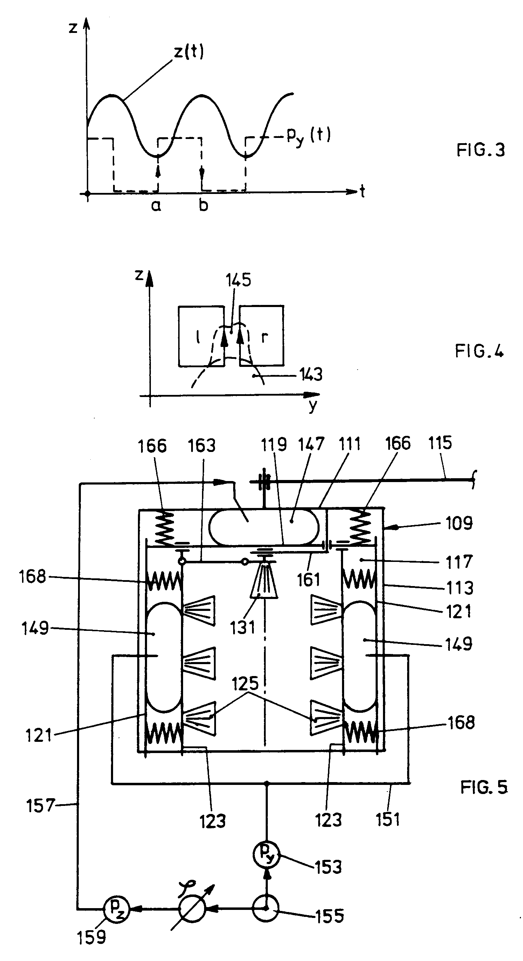

Durch die nachfolgend beschriebene Ansteuerung der Druckerzeugungsorgane 129 bzw. des Antriebsorgans 127 wird ein wischendes, beidseitiges Zahnreinigen vom Zahnfleisch zur Zahnkrone hin, unter beidseitig kontrollierten, vorzugsweise gleichen Drücken erzielt. In Fig. 3 ist über der Zeitachse qualitativ die anzusteuernde Bewegung der Basis 119 von Fig. 2, entsprechend z(t), eingetragen und, gestrichelt, die Druckansteuerung für die Druckerzeugungsorgane 129, mit $p_y(t)$ bezeichnet. Ist die Basis 119, gemäss Fig. 2, in unterster Position, d.h. beim Einsatz weitest möglich über dem Zahnfleisch, so wird, wie bei "a" dargestellt, der Druck erhöht, sodass beim nachfolgenden Hochziehen der Basis 119 und damit der Reinigungsorgane 125, letztere mit dem optimalen, durch die Druckerzeugungsorgane 129 ausgeübten Reinigungsdruck, entlang Zahnfleisch und Zahn gleiten. Ist die oberste Position der Basis 119 erreicht, entsprechend der vom Zahnfleisch am weitesten entfernten, so wird gemäss "b" in Fig. 3 der Druck reduziert, vorzugsweise auf Null reduziert, womit die Reinigungsorgane 125 möglichst vom Zahn abheben oder mindestens praktisch drucklos an letzterem anliegen. Nun wird die Basis 119 in die Anfangsposition rückgeholt, wo, durch neuerliche Druckerhöhung, die Reinigungsorgane 125 wiederum an das Zahnfleisch gelegt werden. Daraus ist ersichtlich, dass die Bewegung in Zahnlängsrichtung, entsprechend z(t), der Druckfunktion $p_y(t)$ um

$$\frac{\pi}{2}$$

voreilt. Die dargestellten synchronen Verläufe von Druck p(t) in Zahnquerrichtung und Bewegung (t) in Zahnlängsrichtung ergeben für beide seitlichen Reinigungsorganträger 123 mit den Borstenbündeln 125 prinzipielle Bewegungsabläufe, wie in Fig. 4 eingetragen, wobei zur Klarstellung ihrer Relation mit dem Zahn in besagter Fig. mit 143 das Zahnfleisch und mit 145 ein Zahn gestrichelt angedeutet sind.

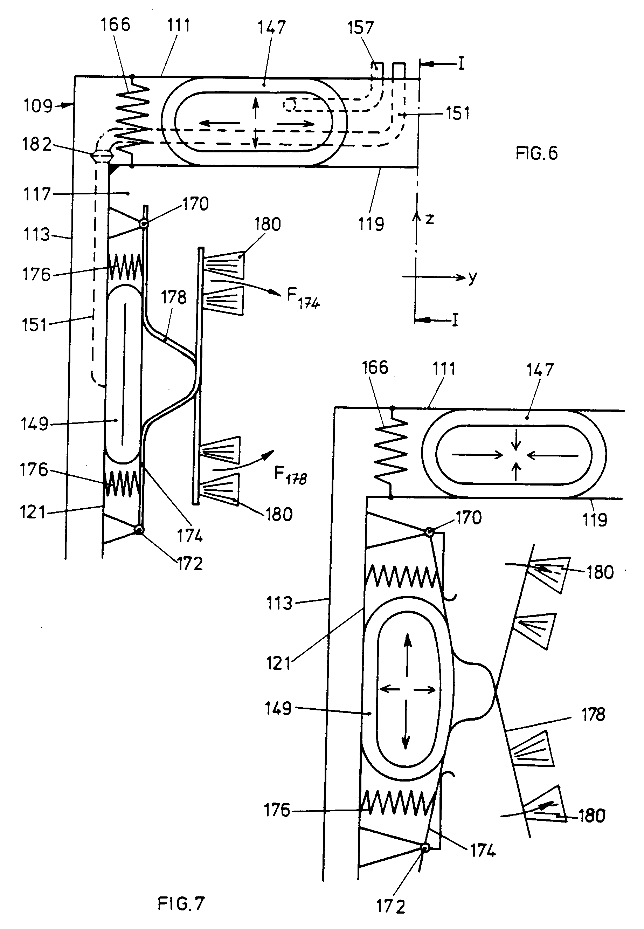

Auf diese Art und Weise wird die bereits erwähnte optimale Wischbewegung der Reinigungsorgane vom Zahnfleisch zur Zahnkrone, d.h. von rot nach weiss, realisiert. In Fig. 5 ist, wiederum schematisch und ausgehend von Fig. 2, ein erster prinzipieller Realisationsschritt, insbesondere für die Antriebs- bzw. Druckerzeugungsorgane 127 bzw. 129 von obgenannter Fig., dargestellt. Für die sich entsprechenden Teile wurden dabei die in Fig. 2 eingeführten Bezugsziffern übernommen. Als Antriebsorgan gemäss 127 von Fig. 2 ist eine Druckblasenanordnung 147 vorgesehen, zwischen der Basis 111 des Trägerrahmens 109 und derjenigen 119 des Reinigungsrahmens 117 wirkend. Als Druckerzeugungsorgane gemäss 129 von Fig. 2 sind beidseits zwischen den Schenkeln 121 des Reinigungsrahmens 117 und den Reinigungsorganträgern 123 je Druckblasen 149 angeordnet, wobei letztere vorzugsweise über eine Druckleitung 151 kommunizieren und mit einer Druckquelle 153, beispielsweise durch einen Motor 155 getrieben, verbunden sind. Die als Antriebsorgan wirkende Blasenanordnung 147 ihrerseits ist über eine Druckleitung 157 mit einer Druckquelle 159 verbunden. Die Druckquelle 159 wird vorzugsweise durch den selben Motor 155, jedoch vorzugsweise auf der mechanischen Seite, um die Phase Ψ verschoben, pulsierend angetrieben.

Im Unterschied zur Darstellung von Fig. 2 sind hier die Oberseiten-Borstenbündel 131 in y-Richtung linear beweglich, was dadurch realisiert wird, dass diese Bündel an einer linearen Führung 161 mit Bezug auf den Trägerrahmen 109 beweglich gelagert sind, wobei ihre y-Bewegung durch Uebertragung derjenigen eines der Reinigungsorgane 123, wie durch einen Uebertragungshebel 163 gesteuert wird. Dadurch wird auf einfache Art und Weise der Antrieb der Oberseiten-Borstenbündel 131 realisiert.

Zwischen der Basis 111 und der Basis 119 wirken Vorspann- und Rückholfederorgane 166 und, in Analogie hierzu, zwischen den Schenkeln 121 und den Reinigungsorganträgern 123 Federorgane 168. Diese Federorgane spannen einerseits die Druckblasen 147 bzw. 149 vor, so dass mit höheren Quelldrücken gearbeitet werden kann, und sichern bei Druckabfall ein rasches Rückholen der Reinigungsorgane sowohl in z-wie auch in y-Richtung, was vor allem bei pulsierender Druckansteuerung wesentlich ist.

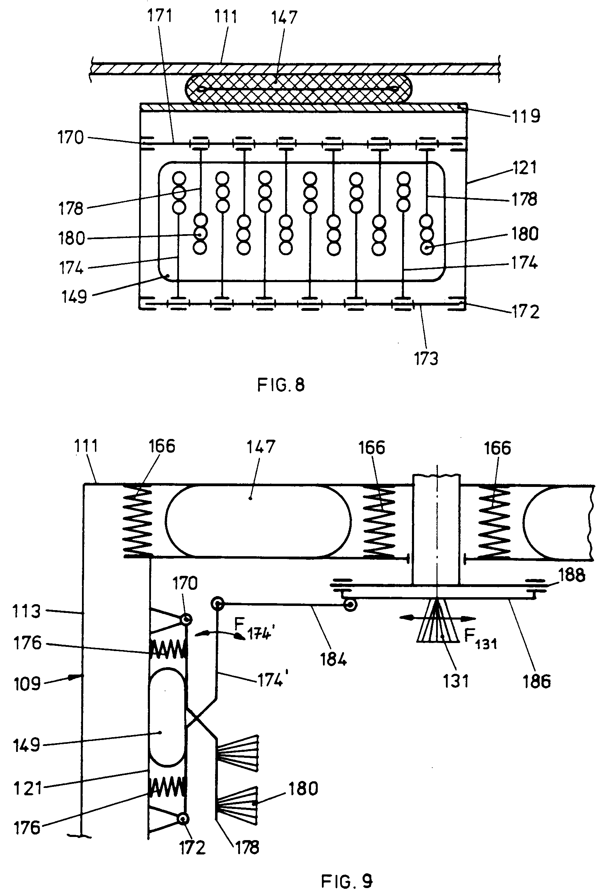

In Fig. 6 ist eine weitere bevorzugte Ausführungsvariante der Anordnung gemäss Fig. 5 weiterentwickelt dargestellt. Auch hier sind Teile, die denjenigen von Fig. 2 bzw. 5 entsprechen, mit den gleichen Positionsziffern versehen. Die Reinigungsorganträger sind hier in Analogie zur Variante rechts von Fig. 2 als Kipphebel ausgebildet. An den Schenkeln 121 des Reinigungsrahmens 117 sind, endständig, bzw. basisseitig, Schwenklager 170 bzw. 172 angeordnet. Am schenkelendständigen Lager 172 ist eine Kipphebelanordnung 174 gegen die Kraft einer Feder 176 schwenkbar gelagert. In Analogie ist am Schwenklager 170 eine Kipphebelanordnung 178 gegen die Kraft einer weiteren Feder 176 schwenkbar gelagert. Die Kipphebelanordnungen 174 und 178 sind an den entsprechenden Lagern endständig gelagert und tragen an ihren andern Enden Reinigungsorgane- wie Borstenbündel 180. Zwischen den Kipphebelanordnungen 174 und 178 und den jeweiligen Schenkeln 121 liegt wiederum mindestens eine Blase 149. In Analogie zu Fig. 5 sind beidseitig die Blasen 149 über je eine gestrichelt eingetragene Druckleitung 151, allenfalls ein oder mehrere flexible Kupplungsstücke 182, auf eine hier nicht dargestellte Druckquelle geführt. Der Antrieb der Basis 119 erfolgt in beschriebener Art und Weise über die durch mindestens eine Druckleitung 157 druckbeaufschlagte Blase 147. Durch Druckbeaufschlagung der Blasen 149 werden die Kipphebel 174 bzw. 178 in den in der Figur mit $F_{174}$ bzw. $F_{178}$ angegebenen Richtungen, mit einer Komponente in y-Richtung, geschwenkt. Die Lage der Kipphebel mit den ihnen zugeordneten Reinigungsorganen, bei mindestens teilweise druckbeaufschlagter Blase 149, ist in Fig. 7 dargestellt. Die innerhalb der Blasen 147 bzw. 149 eingetragenen Pfeile sollen dabei die zugeordneten Druckänderungstendenzen in der dargestellten Position klar machen. Wird die Blase 149 zunehmend druckbeaufschlagt, so wird die Blase 147 entlastet, um in der bereits beschriebenen Art und Weise vom Zahnfleisch zum Zahn zu laufen. In Fig. 8 ist eine Teilansicht der Anordnung gemäss Fig. 6 aus der Sicht nach Linie |-| dargestellt. Daraus sind insbesondere die Ausbildungen der Kipphebelanordnungen 174 bzw. 178 ersichtlich. Als Lager 170 bzw. 172 erstrecken sich entlang den Schenkeln 121 Schwenkachsen 171 bzw. 173, woran, kammartig gestaffelt ineinandergreifend, zwei oder mehr Kipphebel 174 bzw. 178 angeordnet sind, mit den am einen ihrer Enden gelagerten Borstenbündeln 180. Durch Vorsehen einer Mehrzahl kammartig ineinandergreifender Kipphebel, je in Wechselwirkung mit der dem Schenkel 121 zugeordneten Druckblase 149, wird ein optimales Anlegen von Reinigungsorganen auch an unregelmässige Zahnoberflächen gewährleistet, wie in dem Interdentalraum.

In Fig. 9 ist die Anordnung gemäss Fig. 6 dargestellt, ergänzt mit dem schematisch dargestellten Antrieb der Oberseiten-Borstenbündel 131. Am einen der vorgesehenen Kipphebel 174', analog angeordnet, wie die Kipphebel 174, jedoch vorzugsweise keine Borstenbündel 180 tragend, ist ein Uebertragungshebel 184 schwenkbar gelagert. Die Oberseiten-Borstenbündel 131 laufen auf einem Schlitten 186, linear geführt an einer entsprechenden Führung 188, an Trägerrahmen 109. Der Uebertragungshebel 184 ist z.B. ebenfalls gelenkig mit dem Schlitten 186 verbunden, derart, dass sich bei pendelnder Schwenkbewegung entsprechend $F_{174}$, des Kipphebels 174', aufgrund der Wirkung der Druckblase 149, ein mit $F_{131}$ bezeichnetes Hin- und Herpendeln der Oberseiten-Borstenbündel 131 in Richtung entsprechend der Raumachse y von Fig. 2 ergibt. Auf diese Art und Weise wird ohne Vorsehen zusätzlicher Antriebsorgane ein vorgesehenes Druckbetätigungsorgan, entsprechend der Druckblase 149, gleichzeitig auch als Antriebsorgan für die besagen Oberseiten-Borstenbündel 131 realisiert.

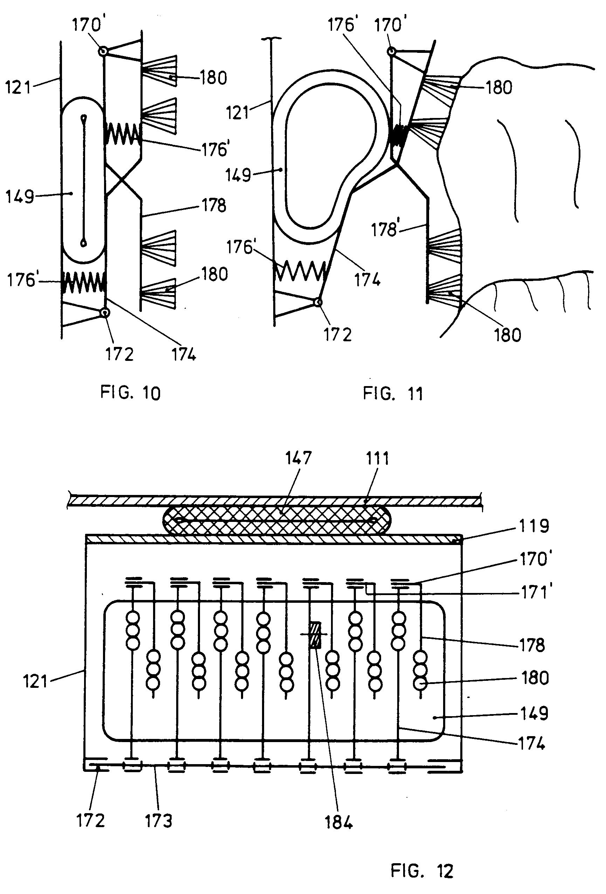

Die Fig. 10 bis 12 zeigen eine weitere Ausführungsvariante der Kipphebellagerung in Teilansichten analog zu den Darstellungen von Fig. 6 bis 8. Auch hier sind dieselben Bezugszeichen eingesetzt. Anstelle des Vorsehens eines Schwenklagers 170 für die der Basis 119 zugekehrt gelagerten Kipphebel 178, wie insbesondere aus Fig. 8 ersichtlich, trägt nun jeder der mit Bezug auf die Schenkel 121 endständig an der Achse 173 gelagerten Hebel 174, an demjenigen Ende, an welchem er auch mit den Borstenbündeln 180 versehen ist, ein Schwenklager 171', woran analog zu den Kipphebeln 178 von Fig. 6 bis 8, Kipphebel 178' gelagert sind. Somit sind, im Unterschied zu den Darstellungen von Fig. 6 bis 8 bei der Ausführungsvariante gemäss den Fig. 10 bis 12, die einen Kipphebel endständig an den andern gelagert. Auch hier wird vorzugsweise, wie in Fig. 8, hier bei 184 dargestellt, ein Uebertragungshebel für den Antrieb von Oberseiten-Borstenbündeln, wie 131 von Fig. 9, vorgesehen.

Fig. 11 zeigt, wie sich bei dieser bevorzugten Lagerungsvariante der Kipphebel, die vorgesehenen Borstenbündel 180 qualitativ an einen Zahn bzw. an das Zahnfleisch legen. Bei dieser Ausführungsvariante wird die Vorspann- bzw. Rückholfeder für die Kipphebel 178', vorzugsweise zwischen den Kippheebeln 174 und 178', wie insbesondere in Fig. 10 mit 176' eingetragen, vorgesehen.

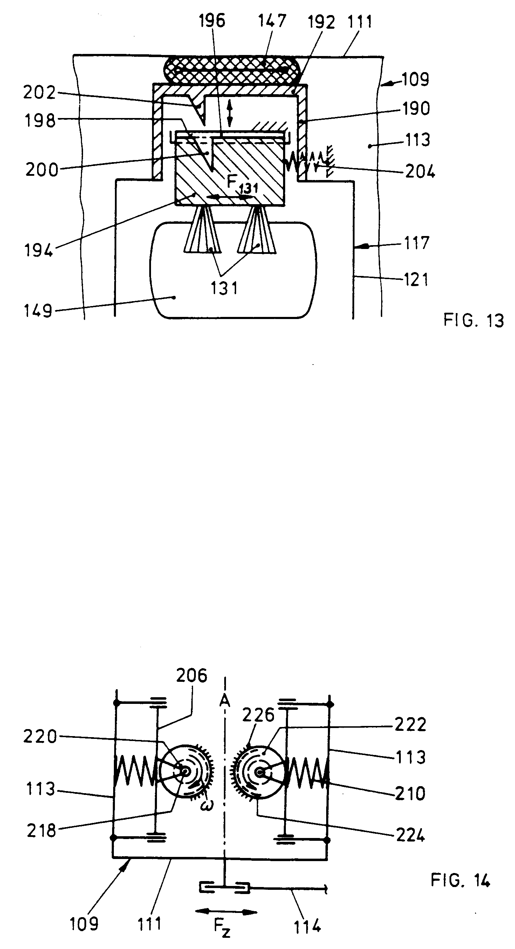

In Fig. 13 ist eine weitere Antriebsmöglichkeit für die Oberseiten-Borstenbündel 131 dargestellt, und zwar in einer schematischen Darstellung, betrachtet analog zu Fig. 8 oder 12, wobei jedoch aus Uebersichtsgründen die Anordnung der Kipphebel nicht eingezeichnet ist. Letztere sind, wie bereits erläutert, angeordnet. Die auf der Basis 111 des Trägerrahmens 109 ruhende Blase 147 wirkt in bereits beschriebener Art und Weise auf den Reinigungsrahmen 117 mit seinen Schenkeln 121, als Antrieb in z-Richtung. Im Zentralbereich weist der Reinigungsrahmen 117 eine gegen die Basis 111 des Trägerrahmens 109 hin verlängerte Ausformung 190 auf, in Form einer an den Schenkeln 113 des Trägerrahmens 109 beidseits offenen, der Basis 111 zugekehrten Rinne mit einer auf der Blase 147 aufliegenden Rinnenbasis 192. Durch diese Ausformung 190 wird eine parallel zur Basis 111 verlaufende Rinne, von einem Trägerrahmenschenkel 113 zum andern offen, festgelegt. An diesen Schenkeln 113 des Trägerrahmens 109 ist beidseitig ein Schlitten 194, in der in Fig. 2 mit y bezeichneten Richtung verschieblich, an Führungen 196 gelagert. Die der Binnenbasis 192 zugekehrte Seite 198 des Schlittens 194 weist eine Keilführungs-Einnehmung 200 auf, während die Basis 192 eine mit der Keilführungs-Einnehmung 200 in Wirkverbindung stehende Keiltrieb-Ausformung 202 trägt. Wird nun der Reinigungsrahmen 117 durch Druckbeaufschlagung der Blase 147 angehoben, so tritt die Keiltrieb-Ausformung 202 mit der Keilführungs-Einformung 200 in Verbindung und der Schlitten 194 wird gemäss Fig. 13 nach links geschoben. Bei Entlasten der Blase 147 wird der Schlitten 194 durch Wirkung einer Zugfeder 204 rückgeholt, welch letztere einerseits am Schlitten 194, andererer-

seits am Trägerrahmen 109 gelagert ist. Dadurch wird die Hin- und Herbewegung $F_{131}$ der Oberflachen-Borstenbundel 131 erzeugt.

In Fig. 14 ist, wiederum schematisch, eine weitere Ausbildungsvariante des erfindungsgemässen Zahnreinigungsgerätes dargestellt. Bis anhin wurden die Druckerzeugungsorgane in der Realisation vornehmlich als pneumatisch. allenfalls hydraulisch, betätigte Blasen dargestellt. Fig. 14 zeigt nun eine Ausführungsvariante, bei der die Druckerzeugungsorgane anders ausgebildet sind.

Gemäss dieser Fig. sind Reinigungsorganträger 206 und Druckfederanordnungen 210 vorgesehen. Es versteht sich jedoch von selbst, dass als Druckerzeugungsorgane auch andere Organe, wie beispielsweise die vorgängig beschriebenen Druckblasenanordnungen, eingesetzt werden können. An den Reinigungsorganträgern 206 sind, mit Achsen 218 quer zur Basis 111 verlaufend, Rotationsantriebsorgane, wie Wasser- oder vorzugsweise Luftkleinmotoren 220 vorgesehen, die Reinigungsrollen 222 antreiben. Die Reinigungsrollen 222 sind dabei vorzugsweise in der in Fig. 2 mit x eingetragenen Richtung ausgedehnt und weisen einen gummielastischen Trägermantel 224 auf, worauf Reinigungsorgane, wie die schematisch dargestellten Borsten 226, aufgebracht sind. Die Kleinmotoren 220 werden in der mit eingezeichneten Richtung angetrieben, wodurch wiederum die als optimal befundene Wischbewegung vom Zahnfleisch zur Zahnkrone hin realisiert wird. Dabei versteht es sich von selbst, dass ein weiter vereinfachtes erfindungsgemässes Zahnreinigungsgerät auch nur, mit Bezug auf die Symmetrieachse A der Anordnung gemäss Fig. 14, die eine Hälfte umfassen kann. Dann ist der Trägerrahmen L-förmig ausgebildet mit lediglich einer Kleinmotor-Reinigungsrollen-Anordnung. Die angestrebte Bewegung kann auch - ohne Motortrieb - durch richtungsspezifische Dämpfung, wie ein Rätschen-System, realisiert werden. Dann wird der Zahn zwischen die drehfreien Rollen geschoben und gegen eine Rollendrehhemmung ausgezogen.

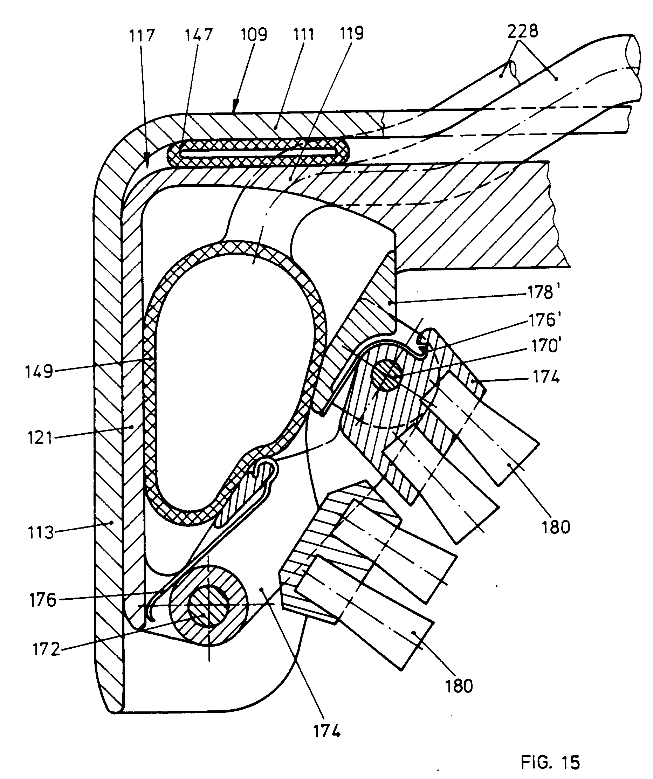

In Fig. 15 ist eine Teillängsschnittdarstellung - in Analogie beispielsweise zur Darstellung von Fig. 6 - einer bevorzugten Realisationsform des erfindungsgemässen Reinigungsgerätes dargestellt, prinzipiell aufgebaut, nach den Darstellungen von Fig. 10 bis 12. Dementsprechend sind auch die gleichen Bezugszeichen gewählt. Daraus ist zusätzlich die Führung von Druckleitungen 228 zu den Blasen 149 bzw. 147 ersichtlich.

die Vorspann- und Rückholfedern 176 bzw. 176' der Fig. 10 bis 12 sind als Blattfedern ausgebildet, einerseits zwischen den Schenkeln 121 des Reinigungsrahmens 117 und den Kipphebeln 147 wirkend, andererseits zwischen letzterwähnten Kipphebeln 147 und den daran an den Lagern 170' gelagerten Hebeln 176'.

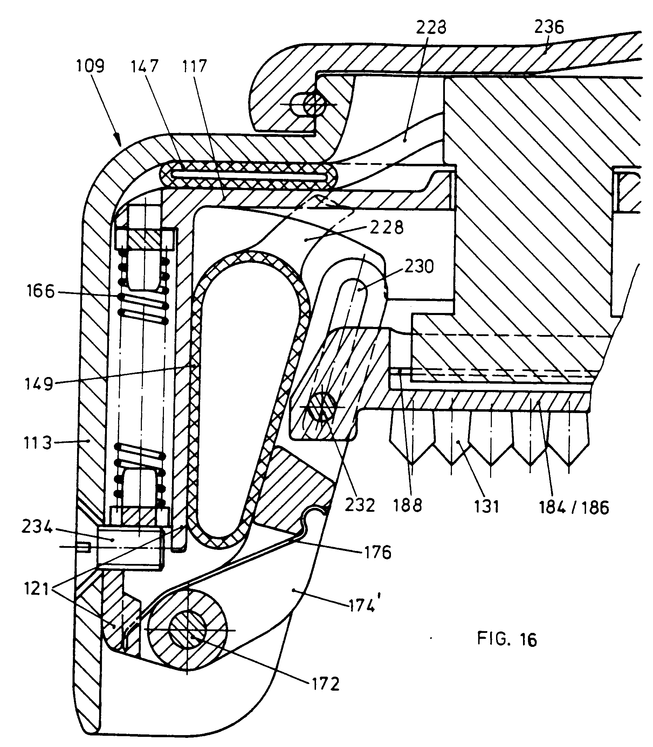

In Fig. 16 ist in einer zentralen Längsschnittdarstellung des Gerätes gemäss Fig. 15 der Antrieb der Oberseiten-Borstenbündel 131 dargestellt. Dieser Antrieb entspricht dem in Fig. 9 prinzipiell beschriebenen. Wie ersichtlich, ist ein Kipphebel 174' vorgesehen, der mit einer endständigen Führungsnut 230 versehen ist, worin ein Bolzen 232 gleitend geführt ist. Der Bolzen 232 seinerseits ist am Schlitten 186 gelagert, der somit gleichzeitig auch als Uebertragungshebel 184 dient. Eine Vorspann- bzw. Rückhol-Blattfeder 176 ist analog zur Feder 176 gemäss Fig. 15 für die borstenbündeltragenden Kipphebel 174 vorgesehen. Die Druckfedern 166 ruhen einerseits an einem Anschlagbolzen 234, fest mit den Schenkeln 113 des Trägerrahmens 109 verbunden, und andererseits am Reinigungsrahmen 117. Aus der Figur ist weiter die Anordnung des Führungsgriffes 236 ersichtlich, mit den darin geführten Druckleitungen 228 für die separat pulsierend anzusteuernden Antriebsorgane, entsprechend den Blasen 147 bzw. Druckerzeugungsorgane, entsprechend den Blasen 149.

Im weiteren kann die vorbeschriebene Wischbewegung vom Zahnfleisch gegen die Zahnkrone hin auch invertiert werden, so dass eine Bewegung der Reinigungsorgane dann von der Zahnkrone gegen das Zahnfleisch hin erfolgt, wenn, bei einer Gebissbehandlung, beispielsweise ein Behandlungsstoff an den Zahnfleisch-Zahnansatz gestossen werden soll. Hierzu kann am Gerät die vorbeschriebene Bewegung invertiert werden.

Mit dem beschriebenen Zahnreinigungsgerät in den unterschiedlichen Varianten wird eine nach neuesten wissenschaftlichen Erkenntnissen optimale Zahnreinigung möglich. Obwohl als Drukkerzeugungsorgane, wie auch als Antriebsorgane, vornehmlich wasser- oder luftdruckbeaufschlagte, also pneumatische oder hydraulische Blasen bzw. Bälge erwähnt worden sind oder auch Federorgane, versteht es sich von selbst, dass andere Mittel, wie mechanische, elektrische oder elektromechanische Antriebe, wie mit Exzentern, für die Ansteuerung in Zahnlängsrichtung bzw. -querrichtung eingesetzt werden können. Die insbesondere in den Fig. 15 und 16 detailliert dargestellte Realisation wird bis jetzt bevorzugt. Dabei bleibt noch zu erwähnen, dass die Schwenkbeweglichkeit des Trägerrahmens 109, mit Bezug auf den Führungsgriff 236, vorzugsweise durch Anschläge begrenzt wird, um nicht durch Ueberdrehen die Druckleitungen 228 zu beschädigen. Die Druckerzeugung wird dabei vorzugsweise ebenfalls mittels Kleinmotoren, vorzugsweise im Führungsgriff 236 integriert, vorgenommen, die vorzugsweise batterie- oder akkumulatorgespiesen sind. Damit wird dann ein netzunabhängiges, überall einsetzbares Zahnreinigungsgerät geschaffen.

**Patentansprüche**

1. Verfahren zum Antrieb eines motorisch getriebenen Zahnreinigungsorgans, bei dem das Reinigungsorgan in einer ersten Richtung, entsprechend einer Zahnlängsachse, sowie in einer zweiten Richtung, senkrecht dazu, unterschiedlich oszillierend bewegt wird, indem als Antrieb in der ersten Richtung ein im wesentlichen als Bewegungsantrieb wirkender Antrieb eingesetzt wird, als Antrieb in der zweiten Richtung ein Kraftantrieb, derart, dass sich die Bewegung des Reinigungsorgans in der zweiten Richtung in Funktion einer oszillierenden Kraft des Kraftantriebes und auf das Reinigungsorgan rückwirkender Kräfte einstellt, dadurch gekennzeichnet, dass, als Widerlager für das Reinigungsorgan, mindestens ein weiteres Reinigungsorgan, in zweiter Richtung vom einen auf Abstand gehalten, vorgesehen wird, derart, dass ein zu reinigender Zahn zwischen den Reinigungsorganen aufgenommen werden kann.

2. Verfahren zum Antrieb eines motorisch getriebenen Zahnreinigungsorgans, bei dem das Reinigungsorgan in einer ersten Richtung, entsprechend einer Zahnlängsachse, sowie in einer zweiten Richtung, senkrecht dazu, unterschiedlich oszillierend bewegt wird, indem als Antrieb in der ersten Richtung ein im wesentlichen als Bewegungsantrieb wirkender Antrieb eingesetzt wird, als Antrieb in der zweiten Richtung ein Kraftantrieb, derart, dass sich die Bewegung des Reinigungsorgans in der zweiten Richtung in Funktion einer oszillierenden Kraft des Kraftantriebes und auf das Reinigungsorgan rückwirkender Kräfte einstellt, dadurch gekennzeichnet, dass man mindestens zwei Reinigungsorgane bezüglich ihrer Bewegung in erster Richtung koppelt, bezüglich ihrer Bewegung in zweiter Richtung entkoppelt, derart, dass sich die Reinigungsorgane in zweiter Richtung, unter Kraftantriebseinwirkung, individuell bewegen können.

3. Verfahren nach einem der Ansprüche 1 oder 2, dadurch gekennzeichnet, dass man den Bewegungsantrieb und den Kraftantrieb mit gleicher Oszillationsfrequenz betreibt.

4. Verfahren nach einem der Ansprüche 1 oder 3, dadurch gekennzeichnet, dass man das weitere Reinigungsorgan in der ersten Richtung mit dem einen Reinigungsorgan synchron bewegt und in der zweiten Richtung mit entgegengesetzt gerichteter Kraft antreibt.

5. Verfahren nach Anspruch 4, dadurch gekennzeichnet, dass man das eine und das weitere Reinigungsorgan an Schankelinnenpartien eines U-Förmigen Trägers lagert und den Antrieb in erster Richtung entlang der Schenkel erzeugt, wobei die auf das eine und das weitere Reinigungsorgan wirkenden Kräfte in zweiter Richtung dann gegeneinander gerichtet werden, wenn die Reinigungsorgane entlang der Schenkel gegen die Basis des U-förmigen Trägers bewegt werden.

6. Verfahren nach einem der Ansprüche 1 bis 5, dadurch gekennzeichnet, dass man die Reinigungsorgane an einem Träger lagert, diesen drehbeweglich an einem Griff und beide Antriebe im Griff erzeugt und mittels Uebertragern auf Reinigungsorgane überträgt.

7. Zahnreinigungsgerät mit mindestens einem Reinigungsorgan, welches an einer Bezugsanordnung (97; 111, 113) derart gelagert ist, dass es in zwei Richtungen (z, y) senkrecht zueinander beweglich ist, und mit einer Antriebsanordnung (127, 129; 147, 149, 168; 222, 210), um das Reinigungsorgan unterschiedlich in den zwei Richtungen oszillierend anzutreiben, wobei die Antriebsanordnung je mit einem Antrieb in einer der jeweiligen Richtungen auf das Reinigungsorgan wirkt, deren einer (129; 149, 168; 220, 210) ein Krafttrieb ist, derart, dass sich, in der zugehörigen Richtung (y), das Reinigungsorgan in Funktion der vom Krafttrieb erzeugten oszillierenden Kraft ($P_y$) und auf das Reinigungsorgan in dieser Richtung ruckwirkenden Reaktionskraft bewegt, dadurch gekennzeichnet, dass an der Bezugsanordnung (111, 113), in der Richtung betrachtet (y), in der der Kraftantrieb wirkt, dem Reinigungsorgan auf Abstand gegenüberliegend, eine als Widerlager wirkende Auflage für einen Zahn vorgesehen ist.

8. Zahnreinigungsgerät mit mindestens einem Reinigungsorgan, welches an einer Bezugsanordnung (97; 111, 113) derart gelagert ist, dass es in zwei Richtungen (z, y) senkrecht zueinander beweglich ist, und mit einer Antriebsanordnung (127, 129; 147, 149, 168; 222, 210), um das Reinigungsorgan unterschiedlich in den zwei Richtungen oszillierend anzutreiben, wobei die Antriebsanordnung je mit einem Antrieb in einer der jeweiligen Richtungen auf das Reinigungsorgan wirkt, deren einer (129; 149, 168; 220, 210) ein Krafttrieb ist, derart, dass sich, in der zugehörigen Richtung (y), das Reinigungsorgan in Funktion der vom Krafttrieb erzeugten oszillierenden Kraft ($P_y$) und auf das Reinigungsorgan in dieser Richtung ruckwirkenden Reaktionskraft bewegt, dadurch gekennzeichnet, dass mindestens zwei Reinigungsorgane (139; 180) vorgesehen sind, die an der Bezugsanordnung (113) in derjenigen Richtung (y) unabhängig voneinander beweglich gelagert sind, in der der Kraftantrieb (141, 149, 176) wirkt.

9. Gerät nach einem der Ansprüche, 7 oder 8 dadurch gekennzeichnet, dass der Kraftantrieb, (149, 168; 220, 210) über eine Federanordnung (168; 176; 176'; 210) auf das Reinigungsorgan oder die Reinigungsorgane wirkt.

10. Gerät nach einem der Ansprüche 7 bis 9, dadurch gekennzeichnet, dass der andere Antrieb (127; 147; 220) im wesentlichen ein Bewegungsantrieb ist.

11. Gerät nach Anspruch 10, dadurch gekennzeichnet, dass der Bewegungshub (z) des Bewegungsantriebes (147) durch eine Federanordnung (166) begrenzt ist.

12. Gerät nach einem der Ansprüche 7 bis 11, dadurch gekennzeichnet, dass die als Reinigungskopf ausgebildete Bezugsanordnung (111, 113) an einem Führungsgriff (115; 114; 236) gelagert ist.

13. Gerät nach Anspruch 12, dadurch gekennzeichnet, dass der Reinigungskopf (111, 113) drehbar am Führungsgriff (115; 114; 236) gelagert ist.

14. Gerät nach einem der Ansprüche 7 bis 13, dadurch gekennzeichnet, dass die beiden Antrieb von einem gemeinsamen Antriebsaggregat (155) erzeugt werden.

15. Gerät nach Anspruch 14, dadurch gekennzeichnet, dass für die beiden Antriebe je Uebertrager (228) vorgesehen sind, die durch eine Drehkupplung (236, 113) zwischen einem Griff (236) und einer als Reinigungskopf ausgebildeten Bezugsanordnung (113) durchgeführt sind.

16. Gerät nach einem der Ansprüche 7 bis 15, dadurch gekennzeichnet, dass mindestens der eine der Antriebe eine pulsierend mit Druckmedium beaufschlagbare Blasenanordnung (147, 149) umfasst.

17. Gerät nach einem der Ansprüche 7-16, dadurch gekennzeichnet, dass die Bezugsanordnung U-förmig ausgebildet ist und das Reinigungsorgan bzw die Reinigungsorgane am einen der Schenkel des U's, nach innen gerichtet, angeordnet ist bzw. sind.

18. Gerät nach Anspruch 17 dadurch gekennzeichnet, dass die Auflage mindestens ein zweites, am anderen Schenkel des U's nach innen gerichtet angeordnetes Reinigungsorgan umfasst.

19. Gerät nach Anspruch 18, dadurch gekennzeichnet, dass das zweite Reinigungsorgan mit Antrieben wie das erste getrieben ist.

20. Gerät nach Anspruch 19, dadurch gekennzeichnet, dass die zwei Reinigungsorgane durch den jeweiligen Krafttrieb quer (y) zur Achse (A) des U's getrieben werden, und die andere Richtung (z) im wesentlichen parallel zu dieser Achse (A) verläuft.

21. Gerät nach Anspruch 20, dadurch gekennzeichnet, dass die beiden Reinigunsgsorgane in der anderen Richtung (z) zum Synchronlauf (Fig. 4) bewegungsgekoppelt sind.

22. Gerät nach Anspruch 20, dadurch gekennzeichnet, dass die beiden Reinigungsorgane durch die jeweiligen Krafttriebe mit entgegengesetzt gerichteter Kraft (Fig. 4) synchron angetrieben sind.

23. Gerät nach Anspruch 19, dadurch gekennzeichnet, dass an jedem der Schenkel (113) des U's mindestens zwei Reinigungsorgane (180) gelagert sind, die in der Richtung (y), in der der Kraftantrieb (149) wirkt, unabhängig voneinander beweglich gelagert sind (170, 172).

24. Gerät nach Anspruch 21, dadurch gekennzeichnet, dass die beiden Reinigungsorgane durch die jeweiligen Kraftantriebe dann gegeneinander getrieben werden, wenn sie gegen die U-Basis (111) hin bewegt werden (Fig. 4).

25. Gerät nach einem der Ansprüche 17 bis 24 dadurch gekennzeichnet, dass das Reinigungsorgan an einem Kipphebel (178) angeordnet ist, der am einen der U-Schenkel (113) schwenkbar gelagert ist und entlang des Schenkels (113) verschieblich ist.

26. Gerät nach Anspruch 25, dadurch gekennzeichnet, dass mindestens zwei Reinigungsorgane am Schenkel (113) gelagert sind, wobei der Kipphebel des einen (174) schenkelendständig (173) derjenige des anderen (178) basiseseitig (170) des U-Schenkels (113) gelagert ist.

27. Gerät nach Anspruch 25, dadurch gekennzeichnet, dass mindestens zwei Reinigungsorgane am Schenkel (113) gelagert sind, wobei der Kipphebel (174) des einen Reinigungsorgans (180) am Schenkel (113), derjenige (178') des anderen Reinigungsorgans (180) am Kipphebel (174) des einen (180) gelagert ist.

**Claims**

1. Process for driving a motor driven dental cleaning member, according to which the cleaning member is displaced differently in oscillation in a first direction corresponding to a longitudinal axis of a tooth, and in a second direction, perpendicular to the first, use being made, as a means of driving in the first direction, of a drive acting essentially as a motive drive, and, as a means of driving in the second direction, of a mechanical drive, so that the displacement of the cleaning member in the second direction is established as a function of an oscillatory force of the mechanical drive and of forces acting by reaction upon the cleaning member, characterized in that there is provided, as a stop for the cleaning member, at least a second cleaning member maintained at a distance from the first in the second direction, so that a tooth to be cleaned can be siezed between the cleaning members.

2. Process for driving a motor driven dental cleaning member, according to which the cleaning member is displaced differently in oscillation in a first direction corresponding to a longitudinal axis of a tooth, and in a second direction, perpendicular to the first, use being made, as a means of driving in the first direction, of a drive acting essentially as a motive drive, and, as a means of driving in the second direction, of a mechanical drive, so that the displacement of the cleaning member in the second direction is established as a function of an oscillatory force of the mechanical drive and of forces acting by reaction upon the cleaning member, characterized in that at least two cleaning members are coupled in respect of their movement in the first direction and uncoupled in respect of their movement in the second direction, so that the cleaning members can be displaced individually in the second direction, through the action of the mechanical drive.

3. Process according to either of claims 1 or 2, characterized in that the motive drive and the mechanical drive are operated at the same oscillation frequency.

4. Process according to one of claims 1 or 3, characterized in that the second cleaning member is displaced in a first direction synchronously with the first cleaning member and is driven in the second direction with a force directed in the opposite direction.

5. Process according to claim 4, characterized in that the first and second cleaning means are mounted on internal portions of arms of a U-shaped support and drive is produced in a first direction along the arms, the forces acting on the first and second cleaning members then being orientated, in the second direction, in directions opposed to one another when the cleaning members are displaced along the arms towards the base of the U-shaped support.

6. Process according to one of claims 1 to 5, characterized in that the cleaning members are mounted on a support, the latter being provided so as to be movable in rotation on a handle and the two drives being provided in the handle, and transmission of the drives to the cleaning members being ensured by means of transmission members.

7. Dental cleaning apparatus comprising at least one cleaning member, which is mounted on a bearing device (97; 111, 113) so as to be mobile in two directions (z, y) perpendicular to one another, and a drive device (127, 129; 147, 149, 168; 222, 210) designed to drive the cleaning member differently in oscillation in the two directions, it being specified that the drive device acts on the cleaning member with the help of a drive for each of the corresponding directions, one of these drives (129; 149, 168; 220, 210) being a mechanical drive, so that the cleaning member moves in the corresponding direction (y) as a function of the oscillatory force ($P_y$) produced by the mechanical drive and of the reaction force acting in this direction on the cleaning member, characterized in that a support serving as a stop for a tooth is provided on the bearing device (111, 113), at a distance from and opposite the cleaning member, as viewed in the direction (y) in which the mechanical drive acts.

8. Dental cleaning apparatus comprising at least one cleaning member, which is mounted on a bearing device (97; 111, 113) so as to be mobile two directions (z, y) perpendicular to one another, and a drive device (127, 129; 147, 149, 168; 222, 210) designed to drive the cleaning member differently in oscillation in the two directions, it being specified that the drive device acts on the cleaning member with the help of a drive for each of the corresponding directions, one of these drives (129; 149, 168; 220, 210) being a mechanical drive, so that the cleaning member moves in the corresponding direction (y) as a function of the oscillatory force ($P_y$) produced by the mechanical drive and of the reaction force acting in this direction on the cleaning member, characterized in that there are provided at least two cleaning members (139; 180) which are mounted so as to be mobile on the bearing device (113), independently of one another in the direction (y) in which the mechanical drive (141; 149, 176) acts.

9. Apparatus according to one of claims 7 or 8, characterized in that the mechanical drive (149, 168; 220, 210) acts on the cleaning member or members via an elastic device (168; 176; 176'; 210).

10. Apparatus according to one of claims 7 to 9, characterized in that the second drive (127; 147; 220) is essentially a motive drive.

11. Apparatus according to claim 10, characterized in that the stroke (z) of the motive drive (147) is limited by means of an elastic device (166).

12. Apparatus according to one of claims 7 to 11, characterized in that the bearing device (111, 113) designed as a cleaning head is mounted on a guide means (115; 114; 236).

13. Apparatus according to claim 12, characterized in that the cleaning head (111, 113) is mounted pivotally on the guide means (115; 114; 236).

14. Apparatus according to one of claims 7 to 13, characterized in that the two drives are produced by a common drive unit (155).

15. Apparatus according to claim 14, characterized in that there are provided for the two drives respective transmission members (228) which pass via a pivotal coupling device (236, 113) between a handle (236) and a bearing device (113) designed as a cleaning head.

16. Apparatus according to one of claims 7 to 15, characterized in that at least one of the drives comprises a balloon device (147, 149) capable of being discontinuously actuated by a pressure applying agent.

17. Apparatus according to one of claims 7 to 16, characterized in that the bearing device is designed in the shape of a U and the cleaning member or members is/are disposed on one of the arms of the U so as to be orientated inwardly.

18. Apparatus according to claim 17, characterized in that the support comprises at least a second cleaning member disposed on the second arm of the U and orientated inwardly.

19. Apparatus according to claim 18, characterized in that the second cleaning member is driven by drives similar to those of the first one.

20. Apparatus according to claim 19, characterized in that the two cleaning members are driven by the corresponding mechanical means, transversely (y) to the axis (A) of the U, and the second direction (z) is substantially parallel to this axis (A).

21. Apparatus according to claim 20, characterized in that the two cleaning members are coupled in movement in the second direction (z) with a view to syncrhonous operation (figure 4).

22. Apparatus according to claim 20, characterized in that the two cleaning members are driven synchronously by the corresponding mechanical drive with a force orientated in the opposite direction.

23. Apparatus according to claim 19, characterized in that there are provided on each of the arms (113) of the U at least two cleaning members (180) which are mounted so as to be mobile independently of one another (170, 172) in the direction (y) in which the mechanical drive (149) acts.

24. Apparatus according to claim 21, characterized in that the two cleaning members are driven towards one another by the corresponding mechanical drive when they are displaced in the direction of the base (111) of the U (figure 4).

25. Apparatus according to one of claims 17 to 24, characterized in that the cleaning member is disposed on an oscillating lever (178) which is pivotally mounted on one of the arms (113) of the U and which can be displace along this arm (113).

26. Apparatus according to claim 25, characterized in that at least two cleaning members are mounted on the arm (113), the oscillating lever (174) of one of them being mounted on the end (173) of this arm and the oscillating lever (178) of the second one being mounted on the base side (170) of the arm (113) of the U.

27. Apparatus according to claim 25, characterized in that there are provided at least two cleaning members mounted on the arm (113), the oscillating lever (174) of the first cleaning member (180) being mounted on the arm (113) and that (178') of the second cleaning member (180) being mounted on the oscillating lever of the first member (180).

**Revendications**

1. Procédé d'entraînement d'un organe de nettoyage dentaire entraîné par moteur, selon lequel l'organe de nettoyage est déplacé différemment suivant des oscillations dans une première direction correspondant à un axe longitudinal d'une dent et dans une seconde direction perpendiculaire à la première, grâce au fait qu'on utilise comme entraînement dans la première direction un entraînement agissant essentiellement comme entraînement moteur, et comme entraînement dans la seconde direction un entraînement mécanique, de sorte que le déplacement de l'organe de nettoyage dans la seconde direction s'établit en fonction d'une force oscillante de l'entraînement mécanique et de forces agissant par réaction sur l'organe de nettoyage, caractérisé en ce qu'il est prévu comme butée pour l'organe de nettoyage au moins un second organe de nettoyage maintenu à distance du premier dans la seconde direction, de sorte qu'une dent à nettoyer puisse être prise entre les organes de nettoyage.

2. Procédé d'entraînement d'un organe de nettoyage dentaire entraîné par moteur, selon lequel l'organe de nettoyage est déplacé différemment suivant des oscillations dans une première direction correspondant à un axe longitudinal d'une dent et dans une seconde direction perpendiculaire à la première, grâce au fait qu'on utilise comme entraînement dans la première direction un entraînement agissant essentiellement comme entraînement moteur, et comme entraînement dans la seconde direction un entraînement mécanique, de sorte que le déplacement de l'organe de nettoyage dans la seconde direction s'établit en fonction d'une force oscillante de l'entraînement mécanique et de forces agissant par réaction sur l'organe de nettoyage, caractérisé en ce qu'on accouple au moins deux organes de nettoyage par rapport à leur mouvement dans la première direction et on les désaccouple par rapport à leur mouvement dans la seconde direction, de sorte que les organes de nettoyage peuvent se déplacer individuellement dans la seconde direction, sous l'action de l'entraînement mécanique.

3. Procédé selon l'une des revendications 1 ou 2, caractérisé en ce que l'entraînement moteur et l'entraînement mécanique se font à une même fréquence oscillatoire.

4. Procédé selon l'une des revendications 1 ou 3, caractérisé en ce qu'on déplace le second organe de nettoyage dans la première direction de façon synchrone avec le premier organe de nettoyage et on l'entraîne dans la seconde direction avec une force dirigée en sens inverse.

5. Procédé selon la revendication 4, caractérisé en ce qu'on monte les premier et second organes de nettoyage sur des parties intérieures de branches d'un support en forme de U et on produit l'entraînement dans une première direction le long des branches, les forces agissant sur les premier et second organes de nettoyage étant alors orientées, dans la seconde direction, à l'opposé l'une de l'autre lorsque les organes de nettoyage sont déplacés le long des branches vers la base du support en forme de U.

6. Procédé selon l'une des revendications 1 à 5, caractérisé en ce qu'on monte les organes de nettoyage sur un support, celui-ci étant prévu mobile en rotation sur une poignée et les deux entraînements étant prévus dans la poignée, et on assure la transmission des entraînements vers les organes de nettoyage à l'aide d'organes de transmission.

7. Appareil de nettoyage dentaire comportant au moins un organe de nettoyage qui est monté sur un dispositif porteur (97 ; 111, 113) de façon à être mobile dans deux directions (z, y) perpendiculaires l'une à l'autre, et un dispositif d'entraînement (127, 129 ; 147, 149, 168 ; 222, 210) destiné à entraîner l'organe de nettoyage suivant des oscillations différemment dans les deux directions, étant précisé que le dispositif d'entraînement agit sur l'organe de nettoyage à l'aide d'un entraînement pour chacune des directions correspondantes, l'un de ces entraînements (129 ; 149, 168 ; 220, 210) étant un entraînement mécanique, de sorte que l'organe de nettoyage se déplace dans la direction correspondante (y) en fonction de la force oscillante ($P_y$) produite par l'entraînement mécanique et de la force de réaction agissant dans cette direction sur l'organe de nettoyage, caractérisé en ce qu'un support servant de butée pour une dent est prévu sur le dispositif porteur (111, 113), à distance et à l'opposé de l'organe de nettoyage, si on considère la direction (y) dans laquelle agit l'entraînement mécanique.

8. Appareil de nettoyage dentaire comportant au moins un organe de nettoyage qui est monté sur un dispositif porteur (97 ; 111, 113) de façon à être mobile dans deux directions (z, y) perpendiculaires l'une à l'autre, et un dispositif d'entraînement (127, 129 ; 147, 149, 168 ; 222, 210) destiné à entraîner l'organe de nettoyage suivant des oscillations différemment dans les deux directions, étant précisé que le dispositif d'entraînement agit sur l'organe de nettoyage à l'aide d'un entraînement pour chacune des directions correspondantes, l'un de ces entraînements (129 ; 149, 168 ; 220, 210) étant un entraînement mécanique, de sorte que l'organe de nettoyage se déplace dans la direction correspondante (y) en fonction de la force oscillante ($P_y$) produite par l'entraînement mécanique et de la force de réaction agissant dans cette direction sur l'organe de nettoyage, caractérisé en ce qu'il est prévu au moins deux organes de nettoyage (139 ; 180) qui sont montés mobiles sur le dispositif porteur (113), indépendamment l'un de l'autre dans la direction (y) dans laquelle agit l'entraînement mécanique (141 ; 149, 176).

9. Appareil selon l'une des revendications 7 ou 8, caractérisé en ce que l'entraînement mécanique (149, 168 ; 220, 210) agit sur le ou les organes de nettoyage par l'intermédiaire d'un dispositif élastique (168 ; 176 ; 176' ; 210).

10. Appareil selon l'une des revendications 7 à 9, caractérisé en ce que le second entraînement (127 ; 147 ; 220) est essentiellement un entraînement de mouvement.

11. Appareil selon la revendication 10, caractérisé en ce que la course de déplacement (z) de l'entraînement de mouvement (117) est limitée à l'aide d'un dispositif élastique (166).

12. Appareil selon l'une des revendications 7 à 11, caractérisé en ce que le dispositif porteur (111, 113) conçu comme une tête de nettoyage est monté sur une poignée de guidage (115 ; 114 ; 236).

13. Appareil selon la revendication 12, caractérisé en ce que la tête de nettoyage (111, 113) est montée pivotante sur la poignée de guidage (115 ; 114 ; 236).

14. Appareil selon l'une des revendications 7 à 13, caractérisé en ce que les deux entraînements sont produits par un équipement moteur commun (155).

15. Appareil selon la revendication 14, caractérisé en ce qu'il est prévu pour les deux entraînements des organes de transmission respectifs (228) qui passent par un dispositif d'accouplement pivotant (236, 113) entre une poignée (236) et un dispositif porteur (113) conçu comme une tête de nettoyage.

16. Appareil selon l'une des revendications 7 à 15, caractérisé en ce que l'un au moins des entraînements comporte un dispositif en forme de poche (147, 149) apte à être sollicité de façon discontinue par un agent de pression.

17. Appareil selon l'une des revendications 7 à 16, caractérisé en ce que le dispositif porteur est conçu en forme de U et le ou les organes de nettoyage sont disposés sur l'une des branches du U en étant orientés vers l'intérieur.

18. Appareil selon la revendication 17, caractérisé en ce que le support comporte au moins un second organe de nettoyage disposé sur la seconde branche du U et orienté vers l'intérieur.

19. Appareil selon la revendication 18, caractérisé en ce que le second organe de nettoyage est entraîné par des entraînements semblables à ceux du premier.

20. Appareil selon la revendication 19, caractérisé en ce que les deux organes de nettoyage sont entraînés par l'entraînement mécanique correspondant, transversalement (y) à l'axe (A) du U, et la seconde direction (z) est sensiblement parallèle à cet axe (A).

21. Appareil selon la revendication 20, caractérisé en ce que les deux organes de nettoyage sont accouplés en mouvement dans la seconde direction (z) en vue d'un fonctionnement synchrone (fig. 4).

22. Appareil selon la revendication 20, caractérisé en ce que les deux organes de nettoyage sont entraînés de façon synchrone par les entraînements mécaniques correspondants avec une force orientée en sens inverse (fig. 4).

23. Appareil selon la revendication 19, caractérisé en ce qu'il est prévu sur chacune des branches (113) du U au moins deux organes de nettoyage (180) qui sont montés mobiles indépendamment l'un de l'autre (170, 172) dans la direction (y) dans laquelle agit l'entraînement mécanique (149).

24. Appareil selon la revendication 21, caractérisé en ce que les deux organes de nettoyage sont entraînés l'un vers l'autre par les entraînements mécaniques correspondants lorsqu'ils sont déplacés en direction de la base (111) du U (fig. 4).

25. Appareil selon l'une des revendications 17 à 24, caractérisé en ce que l'organe de nettoyage est disposé sur un levier oscillant (178) qui est monté pivotant sur l'une des branches (113) du U et qui peut être déplacé le long de cette branche (113).

26. Appareil selon la revendication 25, caractérisé en ce qu'au moins deux organes de nettoyage sont montés sur la branche (113), le levier oscillant (174) de l'un d'eux étant monté à l'extrémité (173) de cette branche et le levier oscillant (178) du second étant monté du côté de la base (170) de la branche (113) du U.

27. Appareil selon la revendication 25, caractérisé en ce qu'il est prévu au moins deux organes de nettoyage montés sur la branche (113), le levier oscillant (174) du premier organe de nettoyage (180) étant monté sur la branche (113) et celui (178') du second organe de nettoyage (180) étant monté sur le levier oscillant du premier organe (180).

FIG.1

FIG. 2

FIG.3

FIG.4

FIG. 5

FIG.6

FIG.7

FIG. 8

FIG. 9

FIG. 10

FIG. 11

FIG. 12

FIG. 13

FIG. 14

FIG. 15

FIG. 16